**Europäisches Patentamt**

**European Patent Office**

**Office européen des brevets**

(11) Veröffentlichungsnummer: **0 102 083**
**B1**

(12) **EUROPÄISCHE PATENTSCHRIFT**

(45) Veröffentlichungstag der Patentschrift:
**10.12.86**

(51) Int. Cl.⁴: **B 60 K 15/04, F 16 L 37/28**

(21) Anmeldenummer: **83108532.9**

(22) Anmeldetag: **30.08.83**

(54) **Selbstschliessender Kraftstoffbehälterverschluss.**

(30) Priorität: **31.08.82 DE 3232340**

(43) Veröffentlichungstag der Anmeldung:
**07.03.84 Patentblatt 84/10**

(45) Bekanntmachung des Hinweises auf die Patenterteilung:
**10.12.86 Patentblatt 86/50**

(84) Benannte Vertragsstaaten:
**AT BE CH DE FR GB IT LI LU NL SE**

(56) Entgegenhaltungen:
**EP - A - 0 079 841**
**DE - A - 1 475 566**
**GB - A - 817 977**
**US - A - 3 334 779**
**US - A - 3 866 638**

(73) Patentinhaber: **Temmesfeld, Axel, Dipl.-Ing.,**
**Kranzhornweg 5, D-8201 Raubling (DE)**

(72) Erfinder: **Temmesfeld, Axel, Dipl.-Ing., Kranzhornweg 5,**
**D-8201 Raubling (DE)**

(74) Vertreter: **Kehl, Günther, Dipl.-Phys. et al, Patentanwälte**
**GEYER, HAGEMANN & KEHL Ismaninger**
**Strasse 108 Postfach 86 03 29, D-8000 München 86 (DE)**

## Beschreibung

Die Erfindung bezieht sich auf einen selbstschliessenden Kraftstoffbehälterverschluss, der im Oberbegriff des Patentanspruchs 1 genannten Art.

Ein Kraftstoffbehälterverschluss dieser Art ist aus der deutschen Offenlegungsschrift 2 336 214 bekannt. Der bekannte Behälterverschluss soll verhindern, dass Kraftstoff in den Einfüllstutzen gelangen kann, bevor die Zapfpistole vollständig in die Durchgangsöffnung des Einfüllstutzens eingefügt ist. Auf diese Weise soll verhindert werden, dass bleihaltiger Kraftstoff, der von Zapfpistolen mit grösserem Durchmesser abgegeben wird, die nicht in die Durchgangsöffnung des Einfüllstutzens passen, in den Kraftstofftank gelangt. Bei dem bekannten Verschluss besteht der Ventilkörper aus einer flachen Platte, die durch eine Schliessfeder gegen ein Loch in einer Querwand des Einfüllstutzens gedrückt wird. Um den aus der genannten Platte bestehenden Ventilkörper in seiner Offenstellung zu halten, ist ein Rastmechanismus vorgesehen, der den Ventilkörper in seiner Offenstellung hält und nach erneutem Niederdrücken wieder freigibt. Die genannte Druckschrift lehrt des weiteren, dass statt des Rastmechanismus auch Abstandsstücke an der der Zapfpistole zugewandten Seite des Ventilkörpers angeordnet sein können, um so das seitliche Vorbeifliessen des Kraftstoffes an dem Ventilkörper zu ermöglichen. Infolge der flachen Ausbildung des Ventilkörpers ergibt sich ein Rückstau, so dass das Zapfen, vor allem bei automatischen Zapfpistolen mit Schwierigkeiten verbunden ist. Darüber hinaus besteht keine Möglichkeit, den bekannten Kraftstoffbehälterverschluss in bereits bestehenden Einfüllstutzen anzuordnen.

Aus der US-Patentschrift 2 247 509 ist ein selbstschliessender Kraftstofftankverschluss bekannt, der aus einem seitlich verschwenkbaren, durch eine Feder vorbelasteten Verschlussdeckel besteht, der durch das Einführen der Zapfpistole aufgestossen wird. Die seitliche Verschwenkbarkeit des Verschlussdeckels erfordert viel Platz, weswegen dieser bekannte Kraftstoffbehälterverschluss zum nachträglichen Einbau für die meisten Kraftfahrzeuge nicht geeignet ist.

Das gleiche trifft zu für die US-Patentschrift 3 730 216, die ebenfalls einen Kraftstoffbehälterverschluss mit einer seitlich verschwenkbaren Verschlussklappe lehrt, welche durch einen Riegelmechanismus in der geschlossenen Stellung arretierbar ist.

Des weiteren lehren die deutsche Auslegeschrift 2 358 735 und die US-Patentschrift 3 580 414 selbstschliessende Kraftstoffbehälterverschlüsse mit seitlich verschwenkbaren Verschlussklappen, die durch Einführen der Zapfpistole seitlich aufgestossen werden. Wie alle seitlich verschwenkbaren Verschlussklappen ، in Kraftstoffbehälterverschlüssen, benötigen auch diese bekannten Verschlüsse viel Platz und sind daher zum nachträglichen Einbau in die Einfüllstutzen vieler Kraftfahrzeugtypen nicht geeignet. Darüber hinaus besteht auch die Gefahr, dass der zur Seite aufgeklappte, auf der Zapfpistole ruhende Verschlussdeckel sich beim Zurückziehen der Zapfpistole mit dieser verkeilt, vor allem, wenn die Zapfpistole rauh ist oder Kerben aufweist. Der aus der US-Patentschrift 3 580 414 bekannte Kraftstoffbehälterverschluss kann – sofern ausreichend Raum vorhanden ist – nach Art eines Bajonettverschlusses auf den Einfüllstutzen eines bereits bestehenden Kraftfahrzeuges gesetzt werden.

Aus der US-Patentschrift 3 866 638 ist eine Flüssigkeitskupplung, insbesondere zum Betanken von Rennwagen, bekannt. Der empfängerseitige Teil der Flüssigkeitskupplung ist zum freien Ende hin zur Ausbildung eines Ventilsitzes verjüngt. Gegen den Ventilsitz ist ein Ventilkörper mittels einer Schliessfeder vorgespannt. Die bekannte Flüssigkeitskupplung kann nur für zwei exakt aufeinander abgestimmte Teile verwendet werden. Insbesondere ist es nicht möglich, mit Hilfe einer üblichen Zapfpistole Kraftstoff in das empfängerseitige Teil der Flüssigkeitskupplung einzuleiten, da der Kraftstoff an der abgeplatteten Oberseite des Ventilkörpers in Richtung auf die Zapfpistole zurückspritzen würde.

Der Erfindung liegt die Aufgabe zugrunde, einen selbstschliessenden Kraftstoffbehälterverschluss der eingangs genannten Art zu schaffen, der eine störungsfreie Handhabung, insbesondere auch bei automatischen Zapfpistolen, ermöglicht und bei dem die Möglichkeit des Einbaus in ein bereits bestehendes Kraftfahrzeug gegeben ist.

Die Lösung dieser Aufgabe ist im kennzeichnenden Teil des Patentanspruches 1 angegeben.

Durch die Lösung gemäss der Erfindung ist auch mit einer automatischen Kraftstoffzapfstole ein rückschlagfreies Betanken möglich, da durch die Führung des strömungsgünstigen Ventilkörpers in dem Rohr ein in strömungsdynamischer Hinsicht günstiger Weg für den Kraftstoff bei geöffnetem Ventil entsteht. Dieser Strömungsweg wird in der Offenstellung des Ventils durch den Ringspalt zwischen dem Ventilkörper und seinem Führungsrohr begrenzt. Des weiteren wird dadurch, dass der Ventilkörper in einem Rohr geführt ist, die Möglichkeit eröffnet, den Kraftstoffbehälterverschluss in dem Einfüllstutzen eines bereits bestehenden Kraftfahrzeuges anzuordnen.

Von dieser Möglichkeit muss jedoch nicht zwangsläufig Gebrauch gemacht werden. So ist es beispielsweise besonders kostengünstig, wenn bei der Erstausrüstung eines Kraftfahrzeuges der Einfüllstutzen selbst als Führungsrohr ausgebildet ist.

Soll jedoch von der Möglichkeit der Nachrüstung eines bereits bestehenden Kraftfahrzeuges Gebrauch gemacht werden, wird nach einer besonders vorteilhaften Ausführungsform das Führungsrohr in den Einfüllstutzen eingefügt und an der Mündung des Einfüllstutzens nach Art eines Tankdeckels befestigt. Bei dieser vorteilhaften Ausgestaltung der Erfindung ist es möglich, dass der Kraftstoffbehälterverschluss in einfachster Weise montiert wird, d.h., dass er lediglich gegen den konventionellen Tankdeckel ausgetauscht wird.

Sowohl bei der Ausführungsform mit Nachrüstmöglichkeit als auch bei der Ausführungsform für die Erstausrüstung hat es sich als besonders vorteilhaft erwiesen, wenn der Ventilkörper mittels einer konzentrischen Führungsstange geführt ist. Durch diese Führungsstange ist eine Bewegung des Ventilkörpers ohne Verkanten und Klemmen möglich.

Nach einer besonders vorteilhaften Lösung ist dabei vorgesehen, dass an der der Mündung des Einfüllstutzens zugewandten Seite des Ventilkörpers die Führungsstange befestigt ist.

Nach einer weiteren vorteilhaften Ausführungsform wird diese Führungsstange in einer im Führungsrohr angeordneten Buchse geführt.

Nach einer konstruktionstechnisch besonders eleganten Lösung wird die Buchse mit einem zylindrischen Aussenmantel und einer Ringschulter versehen, so dass sie als Sitz für die Schliessfeder dienen kann.

In entsprechender Weise wird nach einer weiteren vorteilhaften Ausgestaltung der Erfindung an der der Mündung des Einfüllstutzens abgewandten Seite des Ventilkörpers eine als Federsitz für die Schliessfeder dienende ringförmige Vertiefung eingearbeitet. Bei dieser Lösung wird die Schliessfeder durch die beiden genannten Federsitze sowie durch die Führungsstange in ihrer Position gehalten, wodurch in besonderem Masse eine störungsfreie Betätigung des Kraftstoffbehälterverschlusses gewährleistet ist.

Besonders vorteilhaft ist eine Lösung, bei der der Ventilsitz aus einer konischen Verjüngung des Führungsrohres besteht. Wird des weiteren der Verjüngungswinkel besonders klein gewählt, so entsteht ein besonders steiler Ventilsitz, was zur Folge hat, dass bereits kleine Federkräfte genügen, um ein sicheres Abdichten zu gewährleisten. Des weiteren wird der Schliessdruck durch einen eventuell erhöhten Behälterinnendruck vergrössert, wodurch die Funktionssicherheit des weiteren gesteigert ist.

Die Dichtheit des Sitzes des Ventilkörpers kann gemäss einer weiteren vorteilhaften Ausgestaltung der Erfindung dadurch verbessert werden, dass der Ventilkörper eine an dem Ventilsitz anliegende Dichtung aufweist.

In strömungsdynamischer Hinsicht hat sich eine Ausführungsform als besonders vorteilhaft erwiesen, bei der die Abstandsstücke aus drei rotationssymmetrisch angeordneten, sich etwa achsparallel erstreckenden Flügeln bestehen. Die Länge der Flügel in Axialrichtung ist dabei so bemessen, dass der Abstand zwischen dem Ventilkörper mit Strömungsprofil und der Mündung der Zapfpistole gross genug ist, um einen ausreichenden Strömungsquerschnitt dem fliessenden Kraftstoff zur Verfügung zu stellen.

In fertigungstechnischer Hinsicht hat sich eine Ausführungsform als besonders günstig erwiesen, bei der die Buchse sich an einer Ringschulter des Führungsrohres abstützt. Diese Bauweise ist besonders bei der Ausführungsform günstig, bei der der Einfüllstutzen selbst das Führungsrohr darstellt.

Die beschriebene Bauweise eröffnet die Möglichkeit, die Abstützung über drei elastische Vorsprünge zu realisieren, so dass die Buchse von der Seite des Kraftstoffbehälters her (der in der Regel über einen aufsteckbaren Schlauch an den Einfüllstutzen angeschlossen ist) in das Führungsrohr eingesetzt werden kann, wobei die elastischen Vorsprünge über die Ringschulter gleiten und dort einrasten.

Bei der Ausführungsform für die Erstausrüstung eines Kraftfahrzeuges, also bei der Ausführungsform, bei der der Einfüllstutzen selbst als Führungsrohr ausgestaltet ist, wird nach einer weiteren vorteilhaften Ausführungsform eine umlaufende Auffangrinne im Einfüllstutzen vor dem Ventilsitz angeordnet, um sich eventuell vor dem Ventil ansammelndes Spritzwasser ableiten zu können.

Bei der für die Nachrüstung eines bereits bestehenden Kraftfahrzeuges vorgesehenen Ausführungsform, bei der also das Führungsrohr in den Einfüllstutzen eingefügt und dort an der Mündung nach Art eines Tankdeckels befestigt ist, kann die Erweiterung des Führungsrohres in einfacher Weise dadurch realisiert werden, dass diese aus seitlichen Durchbrüchen besteht. Durch diese seitlichen Durchbrüche wird in der Offenstellung des Ventils der Strömungsweg des Kraftstoffs ausgehend vom Durchmesser des Führungsrohres auf den Durchmesser des Einfüllstutzens erweitert. Dabei können die Durchbrüche zweckmässigerweise so gross ausgestaltet werden, dass das eigentliche Führungsrohr nur noch aus zwei oder drei Längsstegen besteht.

Dabei ist es fertigungstechnisch besonders günstig, wenn die Buchse mit dem Führungsrohr einstückig ausgebildet und an dessen der Mündung des Einfüllstutzens abgewandtem Ende angeordnet ist. Durch die Anordnung am Ende wird eine besonders stabile Führung des Ventiles und ein möglichst grosser Hubweg des Ventiles erzielt.

Durch die Anordnung mindestens eines Längssteges im Führungsrohr wird der Ventilkörper, in dem eine entsprechende, den Längssteg aufnehmende Nut vorgesehen ist, nach einer besonders vorteilhaften Ausführungsform beim Öffnen und Schliessen gegen Verdrehen gesichert, was des weiteren zur Sicherheit bei der Betätigung des Ventiles beiträgt.

Um den Ventilkörper in dem Führungsrohr zwischen Ventilsitz und der Buchse für die Führungsstange unterbringen zu können, hat es sich in fertigungstechnischer Hinsicht als besonders vorteilhaft erwiesen, das Führungsrohr aus zwei ineinandergesteckten Rohrteilen zu fertigen, die durch einen Einrastverschluss verbunden sind.

Wenn bei der zuletzt genannten Ausführungsform das der Mündung des Einfüllstutzens zugewandte Rohrteil den kleineren Durchmesser aufweist und von dem anderen Rohrteil umgeben wird, kann die Stirnseite des Rohrteiles mit dem kleineren Durchmesser eine als Ventilsitz für den Ventilkörper dienende Schräge aufweisen.

Zur tankdeckelartigen Befestigung des Führungsrohres hat es sich als besonders vorteilhaft erwiesen, wenn das Führungsrohr an seinem der Mündung des Einfüllstutzens zugewandten Ende unter Bildung eines Ringraumes nach aussen umgestülpt ist und den Mündungsrand des Einfüllstutzens überdeckt. Diese Lösung bietet die Möglichkeit, das Führungsrohr dicht auf dem Stutzen des Mündungsrandes zu befestigen. Vor allem bietet der durch die Umstülpung des Führungsrohres entstehende ringförmige Raum Platz für eine Befestigungseinrichtung. Der umgestülpte Rand dient als Griffstück bei der Montage des Verschlusses.

So wird nach einer weiteren vorteilhaften Ausgestaltung auf dem Mündungsrand ein ringförmiges Ansatzstück nach Art eines Tankdeckels befestigt, wobei zwischen dem Ansatzstück und dem das Ansatzstück überdeckenden umgestülpten Rand des Führungsrohres eine Drehkupplung besteht, die nach Montage des Kraftstoffbehälterverschlusses zerstörbar ist. Auf diese Weise kann über das Führungsrohr das Ansatzstück durch Drehen auf der Mündung des Einfüllstutzens befestigt werden. Nach Zerstören der Drehkupplung zwischen dem umgestülpten Rand und dem Ansatzstück kann letzteres nicht mehr gedreht werden. Da das Ansatzstück andererseits in dem durch den umgestülpten Rand entstehenden Ringraum des Führungsrohres untergebracht ist, ist es von aussen nicht zugänglich. Somit sitzt der Kraftstoffbehälterverschluss diebstahlsicher in dem Einfüllstutzen des Kraftfahrzeuges.

Nach einer weiteren vorteilhaften Ausgestaltung der Erfindung besteht die Drehkupplung aus einem Mitnehmer und einem Anschlag, wobei beide Teile durch axiales Verschieben des Führungsrohres voneinander trennbar sind. Dabei ist das Führungsrohr in der Stellung mit ausgerücktem Mitnehmer und Anschlag durch einen unlösbaren Rastmechanismus axial arretierbar. Für die Zerstörung der Drehkupplung zwischen Ansatzstück und Führungsrohr wäre gleichfalls eine Abreisssicherung denkbar.

Zweckmässigerweise wird zwischen dem Ansatzstück und dem Mündungsrand des Einfüllstutzens sowie zwischen dem Ansatzstück und dem umgestülpten Rand des Führungsrohrs jeweils eine Dichtung angeordnet.

Der erfindungsgemässe Kraftstoffbehälterverschluss eignet sich insbesondere für Einfüllstutzen, die zwei nach innen unter Freilassung eines Ringsegmentraumes umgestülpte Randteile mit schrägverlaufender Endkante aufweisen (Renkverschlüsse), wobei mit dem Ansatzstück zwei an den Endkanten bei Drehung auflaufende Fanghaken verbunden sind. Die Fanghaken sind zweckmässigerweise durch eine auf dem Ansatzstück abstützende Feder in Axialrichtung vorgespannt, so dass die Feder beim Aufsetzen des Ansatzstückes gedehnt wird, wodurch sich ein besonders dichter Sitz auf dem Mündungsrand des Einfüllstutzens ergibt.

Vorteilhafterweise werden die beiden Fanghaken über einen Ring verbunden, wobei die Feder zwischen dem Ring und dem Ansatzstück angeordnet wird.

In fertigungstechnischer Hinsicht hat sich eine Ausführungsform als besonders vorteilhaft erwiesen, bei der sich das äussere der beiden Rohrteile bis über die Mündung hinaus erstreckt und dort ein Aussengewinde aufweist, das mit einem entsprechenden Innengewinde des Ansatzstükkes im Eingriff steht und bei der das äussere der beiden Rohrteile zwei Anschlagkanten aufweist, die wie die Fanghaken eines Tankdeckels in den Mündungsbereich des Einfüllstutzens einführbar sind und dort anschlagen. Bei dieser Ausführungsform ist keine Feder erforderlich, um den Verschluss fest auf der Mündung des Einfüllstutzens zu befestigen. Denn durch Drehung des Ansatzstückes wird das tankseitige Führungsrohr in Richtung auf die Mündung gezogen, wobei die Anschlagkanten an den umgestülpten Rändern des Einfüllstutzens anschlagen und einen festen Sitz gewährleisten. Die Entfernung der Aussenränder der beiden Anschlagkanten ist dabei so bemessen, dass die beiden Anschlagkanten ähnlich wie die Fanghaken eines Tankdeckels in den Einfüllstutzen einführbar sind, jedoch nach Drehung des Verschlusses im Bereich der umgestülpten Ränder des Einfüllstutzens liegen und dort anschlagen.

Nach einer weiteren vorteilhaften Ausführungsform der Erfindung weist das Ansatzstück mehrere lokale Vertiefungen auf, in die mit dem mündungsseitigen Teil des Führungsrohres oder dessen umgestülptem Rand verbundene Zungen formschlüssig eingreifen. Auf diese Weise wird die Drehkopplung zwischen dem Ansatzstück und dem als Griffstück ausgebildeten umgestülpten Rand des Führungsrohres hergestellt.

Wenn die Zungen nach einer weiteren Ausführungsform der Erfindung elastisch sind und wenn das mündungsseitige Rohrteil des Führungsrohres axial verschiebbar ausgebildet ist, so dass sich die elastischen Zungen aus den lokalen Vertiefungen unter Verformung entfernen und in eine umlaufende Nut in dem Ansatzstück einrasten, besteht die Möglichkeit, durch axiale Verschiebung des mündungsseitigen Teiles des Führungsrohres die Drehkupplung zwischen dem Ansatzstück und dem Führungsrohr zu zerstören, so dass nach der Montage der Kraftstoffbehälterverschluss diebstahlsicher in dem Einfüllstutzen sitzt.

Als Anschlagkanten können gemäss einer weiteren vorteilhaften Ausführungsform die mündungsseitigen Kanten zweier auf dem tankseitigen Teil des Führungsrohres angeordneter Längsstege verwendet werden, die am tankseitigen Ende des Führungsrohres zusammenlaufen und die Buchse für die Führungsstange des Ventilkörpers tragen.

Die Erfindung wird im folgenden anhand der in den Figuren schematisch dargestellten Ausführungsbeispiele näher erläutert. Es zeigt:

Figur 1: einen Kraftstoffbehälterverschluss gemäss der Erfindung im Längsschnitt, der für die Erstausrüstung eines Kraftfahrzeuges geeignet ist;

Figur 2: einen Längsschnitt eines Kraftstoffbehälterverschlusses für die Nachrüstung eines bereits bestehenden Kraftfahrzeuges;

Figur 3: einen Längsschnitt eines weiteren Ausführungsbeispieles eines Kraftstoffbehälterverschlusses für die Nachrüstung eines bereits bestehenden Kraftfahrzeuges, wobei der Verschluss lose in den Einfüllstutzen eingefügt, jedoch noch nicht befestigt ist;

Figur 4: den Kraftstoffbehälterverschluss gemäss Fig. 3, jedoch fest montiert auf dem Einfüllstutzen.

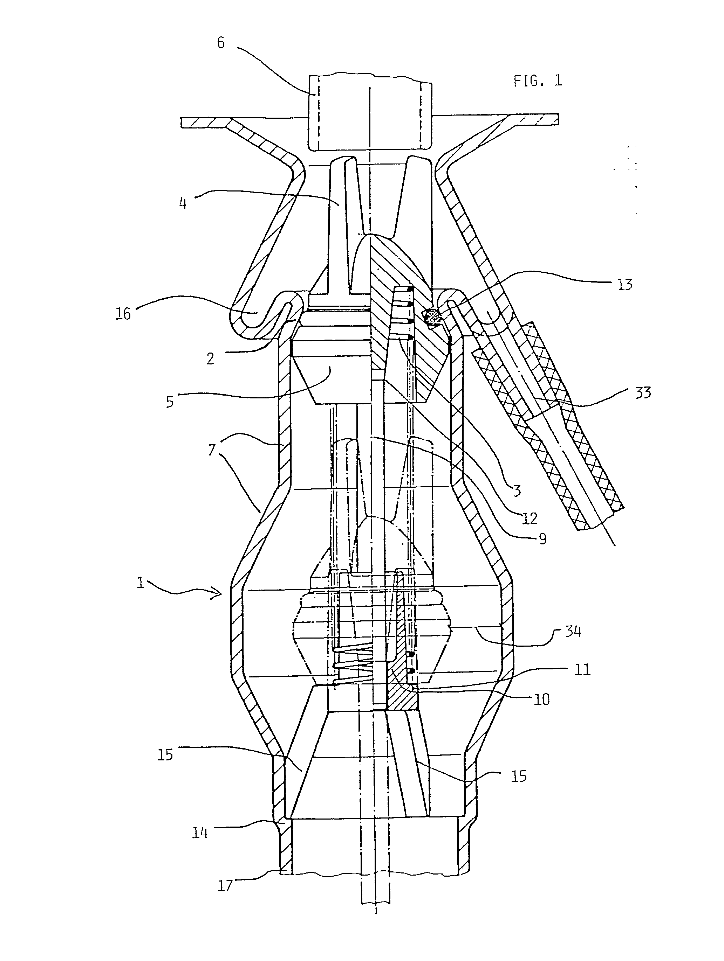

In Figur 1 ist mit dem Bezugszeichen 1 global der Einfüllstutzen für den Kraftstoffbehälterverschluss bezeichnet. Der Einfüllstutzen weist eine Verjüngung in Richtung auf die Mündung auf, die als Ventilsitz 2 für einen Ventilkörper 5 dient. Der Ventilkörper 5 ist an seiner der Mündung zugewandten Seite eiförmig ausgebildet. Er weist dort des weiteren drei um 120° versetzte flügelförmige Abstandsstücke 4 auf. An der Stelle, an der er an dem Ventilsitz 2 anliegt, ist in eine Ringnut ein O-Ring als Dichtung 13 eingebettet. An der der Mündung des Einfüllstutzens abgewandten Seite des Ventilkörpers 5 ist eine ringförmige Vertiefung 12 vorgesehen, in der eine Schliessfeder 3 sitzt, die den Ventilkörper 5 gegen seinen Sitz 2 presst. Der Ventilkörper 5 geht in eine konzentrische Führungsstange 9 über, die in Strömungsrichtung des einzufüllenden Kraftstoffes weist.

An den konischen Ventilsitz 2 schliesst sich in Strömungsrichtung des einzufüllenden Kraftstoffs ein zylindrischer Teil des Einfüllstutzens 1 an, der als Führungsrohr 7 dient. Die lichte Weite dieses zylindrischen Teils ist geringfügig grösser als der grösste Durchmesser des Ventilkörpers 5. An diesen zylindrischen Teil des Einfüllstutzens 1 schliesst sich in Strömungsrichtung des einzufüllenden Kraftstoffs eine konische Erweiterung an.

Nach einer gewissen Strecke ist eine Verjüngung des Einfüllstutzens vorgesehen, so dass dieser in dem Bereich, in dem er an den zum Kraftstoffbehälter führenden Anschlussschlauch angeschlossen ist, etwa wieder seine ursprüngliche lichte Weite aufweist. Der Bereich der Durchmessererweiterung ist in axialer Richtung etwa so lang wie die Axiallänge des Ventilkörpers 5. Zur Aufnahme der Führungsstange 9 ist eine konzentrische Buchse 10 vorgesehen, die in dem Bereich gegen das Ende der Erweiterung des Einfüllstutzens sitzt. Die Buchse 10 stützt sich über drei Vorsprünge 15 an einer Ringschulter 14 des Einfüllstutzens ab. Die Vorsprünge 15 sind elastisch, so dass sie von der Seite des Anschlussstutzens 17 her, an dem der Zuleitungsschlauch für den Kraftstoffbehälter befestigt wird, über die Schulter 14 geschoben werden, wo sie einrasten. Die Buchse 10 weist einen zylindrischen Teil und eine Ringschulter 11 auf, die als Anschlag für die Schliessfeder 3 dienen. Der als Federführung dienende zylindrische Teil der Buchse 10 ist so bemessen, dass er in die ringförmige Vertiefung 12 des Ventilkörpers 5 passt.

Der Einfüllstutzen 1 weist des weiteren vor dem Ventilkörper 5 eine umlaufende Rinne 16 auf, in der Spritzwasser gesammelt und über einen Anschlussstutzen 33 abgeleitet wird.

Der selbstschliessende Kraftstoffbehälterverschluss gemäss der Erfindung arbeitet wie folgt:

In der Ruheposition, die in Vollstrich eingezeichnet ist, liegt der Ventilkörper 5 mit seiner Dichtung 13 an dem Ventilsitz 2 an. Der erforderliche Anpressdruck wird durch die Schliessfeder 3 erzeugt, die sich einerseits an dem Ventilkörper 5 und andererseits an der Ringschulter 11 der Buchse 10 abstützt. Wird zum Betanken des Kraftstoffbehälters eine Zapfpistole 6 in den Einfüllstutzen eingeführt, so drückt diese gegen die drei flügelartigen Abstandsstücke 4, wodurch der Ventilkörper 5 unter Zusammendrücken der Schliessfeder 3 bis zu der strichpunktiert eingezeichneten Position in Richtung auf den Kraftstoffbehälter gedrückt wird. Dabei gleitet die an dem Ventilkörper 5 befestigte Führungsstange 9 durch die Buchse 10, bis die Kante des Ventilkörpers 5 an der Schulter 11 der Buchse anschlägt und der zylindrische Teil der Buchse 10 vollständig in der ringförmigen Vertiefung 12 des Ventilkörpers aufgenommen ist. Da in diesem Bereich der Einfüllstutzen erweitert ist, besteht zwischen der Wandung des Einfüllstutzens und der Aussenfläche des Ventilkörpers 5 ein Ringspalt 34.

Kraftstoff, der aus der Zapfpistole 6 austritt, strömt zwischen den Abstandsstücken 4 hindurch und wird durch die eiförmige Gestalt des Ventilkörpers gleichmässig mit geringem Strömungswiderstand auf den Ringspalt 34 verteilt, d.h., der Ventilkörper wird gleichmässig von Kraftstoff umströmt. Nach dem Beenden des Füllvorganges wird die Zapfpistole 6 aus dem Einfüllstutzen zurückgezogen, wodurch der Ventilkörper sich durch die Wirkung der Feder 3 in seine Schliessposition zurückbewegt. Bei automatischen Zapfpistolen ist dabei ein Anfüllen des zylindrischen Teiles des Führungsrohres 7 nicht möglich, da die Zapfpistole sich bei Erreichen dieses Füllstandes automatisch schliesst. Der zylindrische Bereich des Führungsrohres 7 steht somit als Dehnungsraum bei der Erwärmung des Kraftstoffes zur Verfügung.

Durch die Anordnung des eiförmigen Ventilkörpers 5 in dem sich erweiternden Führungsrohr 7 ist ein geringer Strömungswiderstand für den einströmenden Kraftstoff gewährleistet. Andererseits ist der Ringspalt 34 zwischen dem Ventilkörper 5 und der Wandung im erweiterten Teil des Einfüllstutzens 1 so schmal, dass das Einführen eines Schlauches und somit der Diebstahl von Kraftstoff nicht möglich ist.

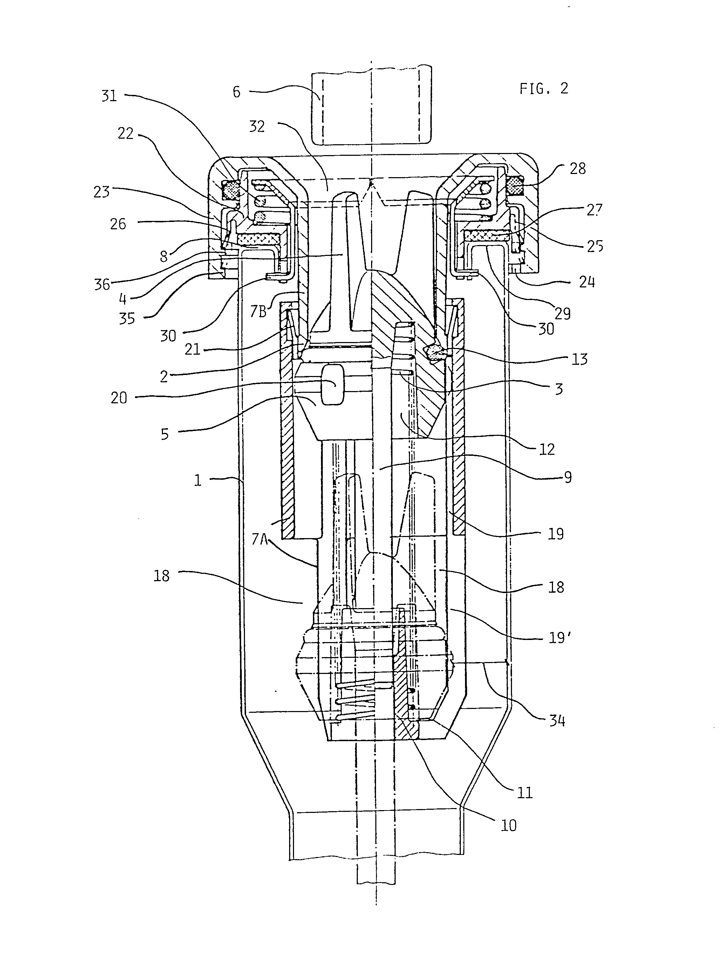

Die erfindungsgemässe Grundkonzeption (strömungsgünstiger Ventilkörper geführt in einem sich erweiternden Führungsrohr) ermöglicht auch leicht den Einbau des Kraftstoffbehälterverschlusses in den Kraftstoffeinfüllstutzen eines bereits bestehenden Kraftfahrzeugs, wie dies bei dem in Figur 2 dargestellten Ausführungsbeispiel realisiert ist.

In Figur 2 ist ein Einfüllstutzen 1 eines Kraftstoffbehälters zu erkennen. Dieser weist mündungsseitig zwei unter Freilassung eines Ringraumes nach innen umgestülpte Randbereiche 29 auf, die schräge Abschlusskanten aufweisen (Mündung für Renkverschluss). Üblicherweise wird auf die Mündung 8 des Einfüllstutzens ein Deckel gesetzt, der zwei Fanghaken aufweist, die beim Aufsetzen in die Lücke zwischen den beiden umgestülpten Randbereichen eingeführt werden und die dann nach Drehen des Deckels an den schrägen Kanten anlaufen, so dass der Deckel in Richtung auf die Mündung 8 gepresst wird. In Figur 2 ist der sonst übliche Tankdeckel durch den erfindungsgemässen Kraftstoffbehälterverschluss ersetzt.

Der Kraftstoffbehälterverschluss gemäss Figur 2 weist wiederum einen Ventilkörper 5 auf, der gleich gebaut ist wie der in Figur 1 dargestellte Ventilkörper, so dass eine nochmalige Beschreibung sich erübrigt. Abweichend von dem in Figur 1 dargestellten Ventilkörper weist jedoch der Ventilkörper der Figur 2 Längsnuten 20 auf, deren Bedeutung weiter unten erläutert wird. Auch der in Figur 2 dargestellte Ventilkörper weist eine Führungsstange 9 auf, die in einer Buchse 10 geführt ist, die der Buchse 10 der Ausführungsform nach Figur 1 entspricht.

Anders als bei der in Figur 1 dargestellten Ausführungsform ist hier jedoch ein gesondertes Führungsrohr vorgesehen, das von dem Einfüllstutzen 1 des Kraftstofftanks getrennt ist. Das Führungsrohr besteht aus zwei Rohrteilen 7a und 7b, die durch einen Einrastverschluss 21 miteinander verbunden sind. Am tankseitigen Ende des Führungsrohres ist die Führungsbuchse 10 konzentrisch befestigt. Im Bereich der Führungsbuchse 10 weist das Rohrteil 7a zahlreiche Durchbrüche 18 auf. Die Durchbrüche 18 sind so gestaltet, dass das Führungsrohr in diesem Bereich praktisch nur noch aus drei Längsstegen 19' besteht.

Das mündungsseitige Rohrteil 7b weist einen kleineren Durchmesser auf und ist an seiner der Mündung abgewandten Stirnkante abgeschrägt. Die Abschrägung dient als Ventilsitz, an dem die Dichtung 13 des Ventilkörpers anliegt.

Die Ausbildung des Führungsrohres 7 in zwei Rohrteilen 7a und 7b, die über einen Einrastverschluss 21 verbunden sind, hat den Vorteil, dass der Ventilkörper 5 bei der Herstellung des Verschlusses in den Bereich zwischen seinem Ventilsitz und die Buchse 10 gebracht werden kann, worin er nach Zusammenfügung der Teile 7a und 7b eingeschlossen ist.

Das mündungsseitige Rohrteil 7b ist mündungsseitig unter Freilassung eines Ringraumes nach aussen umgestülpt, derart, dass der umgestülpte Rand 23 den Mündungsrand des Einfüllstutzens 1 umschliesst. In dem durch den umgestülpten Rand 23 und den Rand der Mündung 8 des Einfüllstutzens 1 begrenzten Ringraum befindet sich eine Befestigungseinrichtung für den Kraftstoffbehälterverschluss, die wie folgt aufgebaut ist: Ein Ansatzstück 22 mit einem koaxialen zylindrischen Teil und einem sich radial erstreckenden Ringteil liegt unter Zwischenschaltung einer Dichtung 27 auf dem Rand der Mündung 8 des Einfüllstutzens 1 auf. Das Ansatzstück wird gegen die Dichtung 27 und den Mündungsrand 8 durch eine Feder 31 gedrückt, die sich an ihrem anderen Ende an einem Ring 32 abstützt, an dem zwei Fanghaken 30 befestigt sind. Die beiden Fanghaken 30 liegen an den schrägen Endkanten der umgestülpten Randteile an, wodurch die Feder 31 gespannt und das Ansatzstück 22 fest auf die Dichtung 27 und den Rand der Mündung 8 des Einfüllstutzens gepresst wird. An der Innenseite des umgestülpten Randes 23 befindet sich eine Ringnut, in der eine Dichtung 28 enthalten ist, die an dem koaxialen zylindrischen Teil des Ansatzstückes 22 anliegt und eine axiale Verschiebung zwischen Führungsrohr und Ansatzstück zulässt.

Das Führungsrohr 7b und sein umgestülpter Rand 23 können zu dem Ansatzstück 22 verschiedene axiale Positionen einnehmen. Hierzu weist die Innenseite des umgestülpten Randes zwei umlaufende Stege 35 und 36 auf, die als Anschlag für einen Einrastmechanismus 26, bestehend aus einer elastischen Klinke, dienen. An dem Ansatzstück 22 ist des weiteren ein Anschlag 25 angeformt. Dieser Anschlag steht mit einem Mitnehmer 24 an dem umgestülpten Rand des Rohrteils 7b in Eingriff, wenn sich das Führungsrohr in der vom Kraftstoffbehälter entfernten seiner beiden möglichen Axialpositionen befindet. In dieser Position liegt die Rastklinke 26 an dem umlaufenden Steg 35 – wie strichpunktiert eingezeichnet – an.

Die Montage des Kraftstoffbehälterverschlusses auf dem Einfüllstutzen eines bestehenden Kraftfahrzeuges geschieht wie folgt: Der Kraftstoffbehälterverschluss wird mit der Buchse 10 voraus in den Tankeinfüllstutzen 1 eingeführt. Dabei wird er so gedreht, dass die Fanghaken 30 in die beiden Lücken zwischen den nach innen umgestülpten Randbereichen 29 der Mündung des Verschlusses eintreten können. Dabei befindet sich das Rohrteil 7b in bezug auf das Ansatzstück 22 in der Axialposition, in der die Rastklinke 26 an dem randseitigen Steg 35 anliegt und der Mitnehmer 24 in Eingriff mit dem Anschlag 25 steht. Durch den Eingriff zwischen dem Mitnehmer 24 und dem Anschlag 25 besteht eine Drehkopplung zwischen dem umgestülpten Rand des Rohrteiles 7b und dem Ansatzstück 22. Somit kann durch Drehen an dem Rand 23 das Ansatzstück 22 und mit ihm die Fanghaken 30 gedreht werden, bis diese – wie bei einem Tankdeckel – an den schrägen Endkanten der beiden nach innen umgestülpten Randteile des Einfüllstutzens 1 auflaufen, wobei die Feder 31 gespannt und das Ansatzstück fest gegen die Dichtung 27 und den Mündungsrand 8 gedrückt wird. Sobald endgültig ein sicherer Sitz erreicht ist, wird das Rohrteil 7b mit seinem umgestülpten Rand 23 in Richtung auf den Kraftstoffbehälter verschoben, so dass die Rastklinken 26 über den umlaufenden Steg 36 gleiten und an diesem einrasten. In dieser Position ist der Mitnehmer 24 von dem Anschlag 25 getrennt, so dass der umgestülpte Rand 23 des Führungsrohres 7b frei drehbar ist, ohne dabei das Ansatzstück 22 mitzunehmen. Da die Rastklinken 26 eine Zurückbewegung in die ursprüngliche Axialposition verhindern und da diese Klinken von aussen nicht zugänglich sind, sondern durch den umgestülpten Rand 23 des Rohrteiles 7b geschützt sind, ist der Kraftstoffbehälterverschluss in diesem Zustand gegen Demontage gesichert.

Die Bedienung des Verschlusses geschieht wie folgt:

In das Führungsrohr mit dem Rohrteil 7b wird die Mündung einer Zapfpistole 6 eingeführt, wobei diese gegen die flügelförmigen Abstandsstücke des Ventilkörpers 5 drückt und diesen durch das Führungsrohr in Strömungsrichtung des einzufüllenden Kraftstoffs bewegt, bis der Ventilkörper 5 die strichpunktiert eingezeichnete Position erreicht hat. Der Ventilkörper 5 wird dabei sicher, d.h. ohne die Gefahr einer Verkantung in dem Rohrteil 7a sowohl durch die in der Buchse 10 geführten Stange 9 als auch durch die Längsnuten 20 und die mit ihnen in Eingriff stehenden Stege 19 und 19' geführt. Wenn der Ventilkörper 5 die strichpunktiert eingezeichnete Position erreicht hat und an der Buchse 10 anschlägt, wird das Zapfventil geöffnet und der Kraftstoff strömt gegen den eiförmigen Teil des Verschlusskörpers, von dort zwischen den Abstandsstücken 4 radial nach aussen und tritt durch die Durchbrüche 18 aus dem Führungsrohr aus. Der Querschnitt des Rohres erweitert sich somit auf den Querschnitt des Einfüllstutzens 1. Ebenso wie bei der Ausführungsform der Figur 1 besteht zwischen dem Ventilkörper 5 und der Wandung des Einfüllstutzens ein Ringspalt 34, der für die Strömung des Kraftstoffes einen ausreichend niedrigen Widerstand darstellt, so dass ein problemloses Betanken möglich ist. Der Ringspalt 34 ist andererseits so klein, dass ein Kraftstoffdiebstahl mit Hilfe eines in den Einfüllstutzen eingeführten Schlauches praktisch nicht möglich ist.

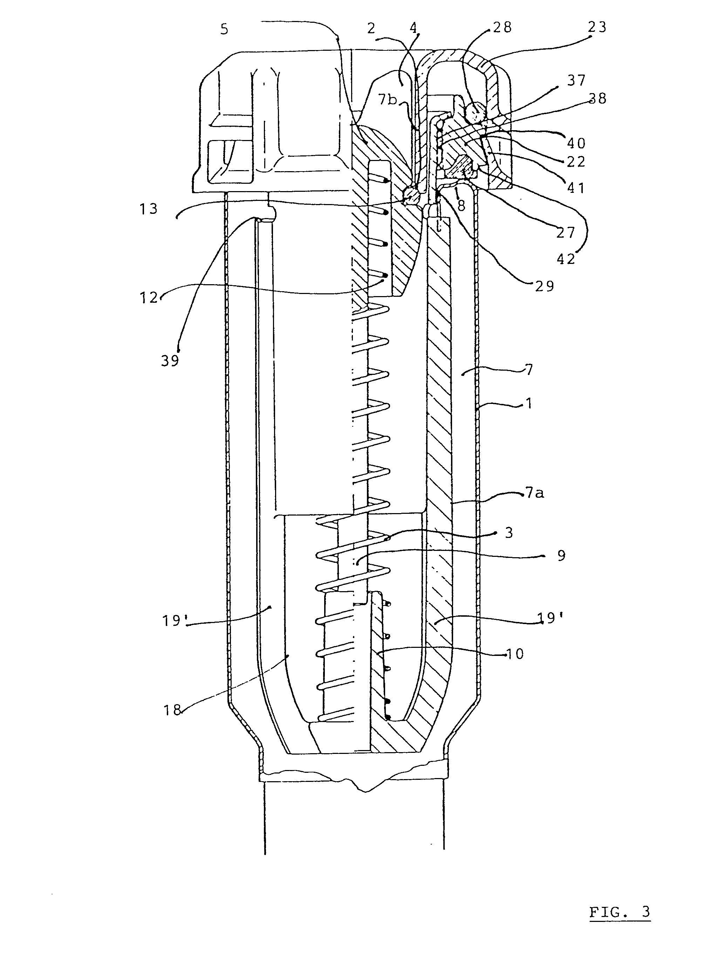

In Figur 3 ist ein weiteres Ausführungsbeispiel eines Kraftstoffbehälterverschlusses zu erkennen, der wie der in Figur 2 dargestellte in den Kraftstoffeinfüllstutzen eines bereits bestehenden Kraftfahrzeuges eingebaut werden kann.

In Figur 3 ist wiederum ein Einfüllstutzen 1 eines Kraftstoffbehälters zu erkennen. Dieser weist mündungsseitig zwei unter Freilassung eines Ringraumes nach innen umgestülpte Randbereiche 29 auf, deren Abschlusskanten abgeschrägt sind (Mündung für Renkverschluss). Üblicherweise wird auf die Mündung 8 des Einfüllstutzens ein Deckel gesetzt, der mit zwei Fanghaken versehen ist, die beim Aufsetzen in die Lücke zwischen den beiden umgestülpten Randbereichen eingeführt werden und die dann nach Drehen des Deckels an den schrägen Kanten anlaufen, so dass der Deckel in Richtung auf die Mündung 8 gepresst wird. In Figur 3 ist der sonst übliche Tankdeckel durch den erfindungsgemässen Kraftstoffbehälterverschluss ersetzt.

Die Anordnung des Ventilkörpers 5 und seine Führung unterscheiden sich hier nicht von der im Ausführungsbeispiel der Figur 2 beschriebenen, so dass eine erneute Beschreibung sich erübrigt. Auch bei der in Figur 3 dargestellten Ausführungsform ist ein vom Einfüllstutzen 1 des Kraftfahrzeuges gesondertes Führungsrohr 7 vorgesehen, das aus zwei Rohrteilen 7a und 7b besteht, wobei jedoch gegenüber der Ausführungsform der Figur 2 das Rohrteil 7b wesentlich verkürzt ist. Am tankseitigen Ende des Führungsrohres ist die Führungsbuchse 10 konzentrisch befestigt. Im Bereich der Führungsbuchse 10 weist das Rohrteil 7a zwei Durchbrüche 18 auf. Die Durchbrüche 18 sind so gestaltet, dass das Führungsrohr in diesem Bereich praktisch nur noch aus zwei Längsstegen 19' besteht.

Das mündungsseitige Rohrteil 7b weist einen kleineren Durchmesser auf und ist an seiner der Mündung abgewandten Stirnkante abgeschrägt. Die Abschrägung dient als Ventilsitz, an dem die Dichtung 13 des Ventilkörpers anliegt.

Das mündungsseitige Rohrteil 7b ist mündungsseitig unter Freilassung eines Ringraumes nach aussen umgestülpt, so dass der umgestülpte Rand 23 den Mündungsrand des Einfüllstutzens 1 umschliesst. In dem durch den umgestülpten Rand 23 und den Rand der Mündung 8 des Einfüllstutzens 1 begrenzten Ringraum befindet sich eine Befestigungseinrichtung für den Kraftstoffbehälterverschluss, die wie folgt aufgebaut ist: Ein Ansatzstück 22 liegt unter Zwischenschaltung einer Dichtung 27 auf dem Rand der Mündung 8 des Einfüllstutzens 1 auf. Das Ansatzstück 22 weist an seiner zylinderförmigen inneren Mantelfläche ein Innengewinde 38 auf, das in Eingriff mit einem Aussengewinde 37 an dem Führungsrohr 7 (Rohrteil 7b) angebracht ist. Der umgestülpte Rand 23 des inneren Rohrteiles 7b weist zahlreiche Zungen 41 auf, die in entsprechende lokale Vertiefungen 40 des Ansatzstückes 22 eingreifen, so dass eine drehfeste Verbindung zwischen dem umgestülpten Rand 23 und dem Ansatzstück 22 geschaffen ist. Ein zwischen dem Ansatzstück 22 und der inneren Wand des umgestülpten Randes 23 angeordnete weitere Dichtung 28 schliesst den Innenraum des Einfüllstutzens nach aussen ab.

Der in Figur 3 dargestellte Kraftstoffbehälterverschluss ist noch nicht fest auf dem Einfüllstutzen montiert, sondern lediglich lose eingesetzt.

Die Montage des Verschlusses geschieht wie folgt: Der Kraftstoffbehälterverschluss wird so in den Einfüllstutzen eingesetzt, dass die beiden Längsstege 19' – ähnlich wie die Fanghaken eines Tankdeckels – in die Bereiche des Einfüllstutzens eingeführt werden, in denen die Randbereiche 29 nicht umgestülpt sind, sondern die gesamte lichte Weite des Einfüllstutzens 1 für die Einführung der Stege 19' zur Verfügung steht. Danach wird der Kraftstoffbehälterverschluss ähnlich wie ein gewöhnlicher Tankdeckel gedreht, so dass die Anschlagkanten 39 der beiden Stege 19' unter die umgestülpten Randbereiche 29 greifen. Danach wird an dem umgestülpten Rand 23, der nach Art eines Griffstückes ausgebildet ist, im Uhrzeigersinn gedreht, so dass das Ansatzstück 22 bedingt durch das formschlüssige Eingreifen der Zungen 41 in die lokalen Vertiefungen 40 mitgedreht wird. Das Führungsrohr 7 kann diese Drehung nicht mitmachen, da die Längsstege an den an den umgestülpten Bereichen 29 üblicherweise angebrachten Anschlagkanten anliegen. Durch die Wirkung der Gewinde 38 und 37 wird das tankseitige Rohrteil 7a des Führungsrohres 7 angehoben, wobei die Anschlagkanten 39 der Längsstege 19' fest gegen die Abschlusskanten der Randbereiche 29 des Einfüllstutzens gepresst werden. Dabei wird ebenfalls die Dichtung 27 fest auf die Mündung 8 des Einfüllstutzens gedrückt, so dass sich ein fester Sitz der gesamten Anordnung in dem Einfüllstutzen ergibt. Wenn dieser feste Sitz des Einfüllstutzens erreicht wird, wird auf den umgestülpten Rand 23 des mündungsseitigen Rohrteils 7b in axialer Richtung ein Druck ausgeübt, so dass sich dieses in Richtung auf den Fahrzeugtank verschiebt. Dabei federn die Zungen 41 etwas radial nach aussen und verlassen die lokalen Vertiefungen 40, bis sie schliesslich in der axialen Endposition in eine umlaufende Ringnut 42 eingreifen. Da diese Ringnut 42 im Gegensatz zu den Vertiefungen 40 rotationssymmetrisch umläuft, ist in dieser Position keine Drehkopplung zwischen dem umgestülpten Rand 23 und dem Ansatzstück 22 vorhanden, so dass der umgestülpte Rand 23 und das Führungsrohrteil 7b frei drehbar sind, ohne dass durch ein solches Drehen die Befestigung des Verschlusses beeinträchtigt wird.

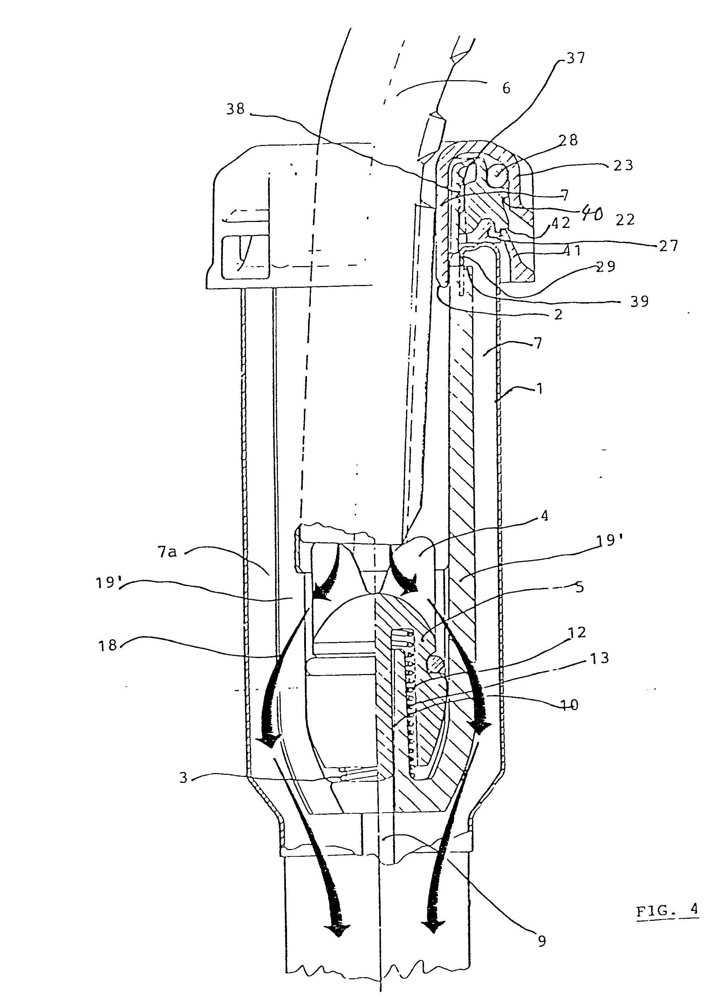

In Figur 4 ist der fertig montierte Kraftstoffbehälterverschluss im Zustand der Betankung dargestellt. Durch die eingeführte Zapfpistole 6 ist der Ventilkörper 5 unter Komprimierung der Schliessfeder 3 in Richtung des einzufüllenden Kraftstoffes aus seinem Ventilsitz 2 geschoben, so dass der aus der Zapfpistole 6 austretende Kraftstoff entlang dem durch Pfeile angedeuteten Weg aus dem Führungsrohr 7 zwischen den durch die beiden Stege 19' begrenzten Öffnungen 18 austreten und über den Einfüllstutzen 1 in den Kraftstofftank gelangen kann. Wie im mündungsseitigen Bereich des Verschlusses zu erkennen ist, liegen die Anschlagkanten 39 der Längsstege 19' an den umgestülpten Randbereichen 29 des Einfüllstutzens 1 an. Der umgestülpte Randbereich 23 des Rohrteiles 7b des Führungsrohres 7 ist in axialer Richtung (im Vergleich zur Darstellung der Figur 3) in Richtung auf den Kraftstoffbehälter verschoben, so dass die Zungen 41 nunmehr in der umlaufenden Nut 42 des Ansatzstückes 22 anliegen, so dass einerseits das Rohrteil 7b und sein umgestülpter Rand 23 in axialer Richtung unveränderbar festliegen und andererseits die Drehkopplung zwischen dem umgestülpten Rand 23 und dem Ansatzstück 22 aufgehoben ist. In diesem Zustand kann der Kraftstoffbehälterverschluss nicht mehr demontiert werden und ist somit gegen Diebstahl gesichert.

**Patentansprüche**

1. Selbstschliessender Kraftstoffbehälterverschluss in einem Einfüllstutzen (1) eines Kraftstoffbehälters, mit einem in Richtung auf einen Ventilsitz (2) mittels einer Schliessfeder (3) vorgespannten, Abstandsstücke (4) aufweisenden, in dem Einfüllstutzen (1) etwa koaxial bewegbaren Ventilkörper (5), der durch Anlegen einer Zapfpistole (6) an die Abstandsstücke (4) in Strömungsrichtung des einzufüllenden Kraftstoffs aus seinem Ventilsitz (2) bewegbar ist, wobei die Abstandsstücke bei angelegtem Einfüllstutzen ein seitliches Abfliessen des Kraftstoffs erlauben, dadurch gekennzeichnet, dass der Ventilkörper (5) in seiner geöffneten Stellung in einem sich in Strömungsrichtung des einzufüllenden Kraftstoffs erweiternden Führungsrohr (7; Rohrteile 7a, 7b) geführt ist, und dass der Mündung des Einfüllstutzens (i) zugewandte Teilflächen der Oberseite des Ventilkörpers (5), die ausserhalb der von den Abstandsstücken (4) belegten Teile der Oberseite des Ventilkörpers liegen, ei-, kugel- oder kegelförmig sind.

2. Kraftstoffbehälterverschluss nach Anspruch 1, dadurch gekennzeichnet, dass der Einfüllstutzen (1) als Führungsrohr (7) ausgebildet ist.

3. Kraftstoffbehälterverschluss nach Anspruch 1, dadurch gekennzeichnet, dass das Führungsrohr (Rohrteile 7a, 7b) in den Einfüllstutzen (1) eingefügt und dort an der Mündung (8) des Einfüllstutzens (1) nach Art eines Tanndeckels befestigt ist.

4. Kraftstoffbehälterverschluss nach einem der Ansprüche 1 bis 3, dadurch gekennzeichnet, dass der Ventilkörper (5) mittels einer konzentrischen Führungsstange (9) geführt ist.

5. Kraftstoffbehälterverschluss nach Anspruch 4, dadurch gekennzeichnet, dass die Führungsstange (9) an der der Mündung des Einfüllstutzens abgewandten Seite des Ventilkörpers (5) angeordnet ist.

6. Kraftstoffbehälterverschluss nach Anspruch 5, dadurch gekennzeichnet, dass die Führungsstange (9) in einer im Führungsrohr (7) angeordneten Buchse (10) geführt ist.

7. Kraftstoffbehälterverschluss nach Anspruch 6, dadurch gekennzeichnet, dass die Buchse (10) einen Federsitz in Form eines zylindrischen Aussenmantels mit einer Ringschulter (11) aufweist.

8. Kraftstoffbehälterverschluss nach einem der Ansprüche 1 bis 7, dadurch gekennzeichnet, dass der Ventilkörper (5) an seiner der Mündung des Einfüllstutzens abgewandten Seite eine als Federsitz dienende ringförmige Vertiefung (12) aufweist.

9. Kraftstoffbehälterverschluss nach einem der Ansprüche 1 bis 8, dadurch gekennzeichnet, dass der Ventilsitz (2) aus einer konischen Verjüngung des Führungsrohres (7) besteht.

10. Kraftstoffbehälterverschluss nach einem der Ansprüche 1 bis 9, dadurch gekennzeichnet, dass der Ventilkörper (5) eine an dem Ventilsitz (2) anliegende Dichtung (13) aufweist.

11. Kraftstoffbehälterverschluss nach einem der Ansprüche 1 bis 10, dadurch gekennzeichnet, dass die Abstandsstücke (4) aus drei rotationssymmetrisch angeordneten, sich etwa achsparallel erstreckenden Flügeln bestehen.

12. Kraftstoffbehälterverschluss nach einem der Ansprüche 1 bis 11, dadurch gekennzeichnet, dass die Buchse (10) sich an einer Ringschulter (14) des Führungsrohres (7) abstützt.

13. Kraftstoffbehälterverschluss nach Anspruch 12, dadurch gekennzeichnet, dass die Abstützung über mindestens drei elastische Vorsprünge (15) erfolgt und dass die Buchse (10) von der Seite des Kraftstoffbehälters her in das Führungsrohr (7) einsetzbar ist, wobei die elastischen Vorsprünge (15) über die Ringschulter (14) gleiten und dort einrasten.

14. Kraftstoffbehälterverschluss nach Anspruch 2 oder nach Anspruch 2 und einem der Ansprüche 4 bis 13, dadurch gekennzeichnet, dass der Einfüllstutzen (1) vor dem Ventilsitz eine umlaufende Auffangrinne (16) aufweist.

15. Kraftstoffbehälterverschluss nach Anspruch 2 oder nach Anspruch 2 und einem der Ansprüche 4 bis 14, dadurch gekennzeichnet, dass der Einfüllstutzen (1) einen Stutzen (17) für das Anschliessen eines zum Kraftstoffbehälter führenden Schlauches aufweist.

16. Kraftstoffbehälterverschluss nach einem der Ansprüche 3 bis 13, dadurch gekennzeichnet, dass die Erweiterung des Führungsrohres (Rohrteile 7a, 7b) aus seitlichen Durchbrüchen (18) besteht.

17. Kraftstoffbehälterverschluss nach einem der Ansprüche 3 bis 10 und 16, dadurch gekennzeichnet, dass die Buchse (10) mit dem Führungsrohr (Rohrteil 7a) einstückig ist und an dessen der Mündung des Einfüllstutzens abgewandten Ende angeordnet ist.

18. Kraftstoffbehälterverschluss nach einem der Ansprüche 3 bis 13, 16 und 17, dadurch gekennzeichnet, dass das Führungsrohr (Rohrteile 7a, 7b) innenseitig mindestens einen Längssteg (19) aufweist und der Ventilkörper (5) eine den Längssteg (19) aufnehmende Nut (20) aufweist.

19. Kraftstoffbehälterverschluss nach einem der Ansprüche 3 bis 13 und 16 bis 18, dadurch gekennzeichnet, dass das Führungsrohr (Rohrteile 7a, 7b) aus zwei ineinandergesteckten Teilen besteht.

20. Kraftstoffbehälterverschluss nach Anspruch 19, dadurch gekennzeichnet, dass das der Mündung des Einfüllstutzens zugewandte Rohrteil (7b) von dem anderen Rohrteil (7a) umgeben wird und eine als Ventilsitz (2) dienende Schräge aufweist.

21. Kraftstoffbehälterverschluss nach einem der Ansprüche 3 bis 13 und 16 bis 20, dadurch gekennzeichnet, dass das Führungsrohr (Rohrteil 7b) an seinem der Mündung des Einfüllstutzens zugewandten Ende unter Bildung eines Ringraumes nach aussen umgestülpt ist und den Mündungsrand (Mündung 8) des Einfüllstutzens (1) überdeckt.

22. Kraftstoffbehälterverschluss nach Anspruch 21, dadurch gekennzeichnet, dass auf dem Mündungsrand (Mündung 8) ein ringförmiges Ansatzstück (22) angeordnet ist, und dass zwischen dem Ansatzstück (22) und dem das Ansatzstück (22) überdeckenden umgestülpten Rand (23) des Führungsrohres (Rohrteil 7b) eine Drehkupplung besteht, die nach Montage des Kraftstoffbehälterverschlusses zerstörbar ist.

23. Kraftstoffbehälterverschluss nach Anspruch 22, dadurch gekennzeichnet, dass die Drehkupplung aus einem Mitnehmer (24) und einem Anschlag (25) besteht, die durch axiales Verschieben des Führungsrohres (Rohrteile 7a, 7b) voneinander trennbar sind, und dass das Führungsrohr (7) in der Stellung mit ausgerücktem Mitnehmer (24) und Anschlag (25) durch einen unlösbaren Rastmechanismus (26) axial arretierbar ist.

24. Kraftstoffbehälterverschluss nach Anspruch 22, dadurch gekennzeichnet, dass zwischen dem Ansatzstück (22) und dem Mündungsrand (8) des Einfüllstutzens (1) sowie zwischen dem Ansatzstück (22) und dem umgestülpten Rand (23) des Führungsrohres (7b) jeweils eine Dichtung (27, 28) angeordnet ist.

25. Kraftstoffbehälterverschluss nach Anspruch 22, dadurch gekennzeichnet, dass die Mündung (8) des Einfüllstutzens (1) zwei nach innen unter Freilassung eines Ringsegmentraums umgestülpte Randteile (29) mit schrägverlaufender Endkante aufweist, und dass mit dem Ansatzstück (22) zwei an den Endkanten bei Drehung auflaufende Fanghaken (30) verbunden sind (Renkverschluss).

26. Kraftstoffbehälterverschluss nach Anspruch 25, dadurch gekennzeichnet, dass die Fanghaken (30) durch eine sich auf dem Ansatzstück (22) abstützende Feder (31) in Axialrichtung vorgespannt sind.

27. Kraftstoffbehälterverschluss nach Anspruch 26, dadurch gekennzeichnet, dass die Fanghaken (30) mit einem Ring (32) verbunden sind, und dass die Feder (31) zwischen dem Ring (32) und dem Ansatzstück (22) angeordnet ist.

28. Kraftstoffbehälterverschluss nach den Ansprüchen 19 bis 22, dadurch gekennzeichnet, dass das äussere der beiden Rohrteile (Rohrteil 7a) sich bis über die Mündung (8) hinaus erstreckt und dort ein Aussengewinde (37) aufweist, das mit einem entsprechenden Innengewinde (38) des Ansatzstückes (22) in Eingriff steht, und dass das äussere der beiden Rohrteile (Rohrteil 7a) zwei Anschlagkanten (39) aufweist, die wie die Fanghaken eines Tankdeckels in den Mündungsbereich des Einfüllstutzens (1) einführbar sind und dort anschlagen.

29. Kraftstoffbehälterverschluss nach Anspruch 28, dadurch gekennzeichnet, dass das Ansatzstück (22) mehrere lokale Vertiefungen (40) aufweist, in die mit dem mündungsseitigen Teil des Führungsrohres (Rohrteil 7b) oder dessen umgestülptem Rand (23) verbundene Zungen (41) formschlüssig eingreifen.

30. Kraftstoffbehälterverschluss nach Anspruch 29, dadurch gekennzeichnet, dass die Zungen (41) elastisch sind.

31. Kraftstoffbehälterverschluss nach Anspruch 30, dadurch gekennzeichnet, dass das mündungsseitige Rohrteil (Rohrteil 7b) des Führungsrohres axial verschiebbar ist, wobei sich die elastischen Zungen (41) aus den lokalen Vertiefungen (40) unter Verformung entfernen und in eine umlaufende Nut in dem Ansatzstück (22) einrasten, so dass nach der axialen Verschiebung der mündungsseitige Teil des Führungsrohres (Rohrteil 7b) in bezug auf das Ansatzstück (22) axial festgelegt, jedoch gegenüber diesem frei drehbar ist.

32. Kraftstoffbehälterverschluss nach einem der Ansprüche 28 bis 31 und nach Anspruch 6, dadurch gekennzeichnet, dass die Anschlagkanten (39) die mündungsseitigen Kanten zweier auf dem tankseitigen Teil (Rohrteil 7a) des Führungsrohres angeordneter Längsstege (19') sind, die am tankseitigen Ende des Führungsrohres (7) zusammenlaufen und die Buchse (10) tragen.

## Claims

1. Self-closing fuel filter pipe for a fuel tank in a filler connection (1) of a fuel tank, with a valve body (5) biased in the direction of a valve seat (2) by means of a locking spring (3), which is provided with spacers (4) and movable approximately coaxially in the filler connection (1), said valve body being movable out of a valve seat (2) by applying a delivery gun (6) to the spacers (4) in the flow direction of the fuel to be filled, the spacers permitting a lateral outflow of the fuel when the filler connection is applied, characterized in that in its open position, the valve body (5) is guided in a guide tube (7; tube parts 7a, 7b) widening in the flow direction of the fuel to be filled and that the partial surfaces of the top of the valve body (5) outside those parts of the top of valve body (5) occupied by spacers (4) and facing the opening of filler connection (1) are oval, conical or spherical.

2. Fuel filter pipe for a fuel tank according to claim 1, characterized in that the filler connection (1) is constructed as a guide tube (7).

3. Fuel filter pipe for a fuel tank according to claim 1, characterized in that the guide tube (tube parts 7a, 7b) is inserted in filler connection (1) and is fixed on the opening (8) thereof in the manner of a tank cover.

4. Fuel filter pipe for a fuel tank according to one of the claims 1 to 3, characterized in that the valve body (5) is guided by means of a concentric guide rod (9).

5. Fuel filter pipe for a fuel tank according to claim 4, characterized in that the guide rod (9) is positioned on the side of valve body (5) remote from the filler connection opening.

6. Fuel filter pipe for a fuel tank according to claim (5), characterized in that the guide rod (9) is guided in a bush (10) arranged in guide tube (7).

7. Fuel filter pipe for a fuel tank according to claim 6, characterized in that the bush (10) has a spring seat in the form of a cylindrical outer jacket with an annular shoulder (11).

8. Fuel filter pipe for a fuel tank according to one of the claims 1 to 7, characterized in that the valve body (5) is provided on its side remote from the filler connection opening with an annular depression (12) serving as a spring seat.

9. Fuel filter pipe for a fuel tank according to one of the claims 1 to 8, characterized in that the seat (2) comprises a conical taper of the guide tube (7).

10. Fuel filter pipe for a fuel tank according to one of the claims 1 to 9, characterized in that the valve body (5) has a packing (13) engaging on valve seat (2).

11. Fuel filter pipe for a fuel tank according to one of the claims 1 to 10, characterized in that the spacers (4) comprise three rotationally symmetrically arranged and roughly axially parallel blades.

12. Fuel filter pipe for a fuel tank according to one of the claims 1 to 11, characterized in that the bush (10) is supported on an annular shoulder (14) of guide tube (7).

13. Fuel filter pipe for a fuel tank according to claim 12, characterized in that supporting takes place by means of at least three elastic projections (15) and that the bush can be inserted in guide tube (7) from the fuel tank side, the elastic projections (15) sliding over annular shoulder (14) and are engaged there.

14. Fuel filter pipe for a fuel tank according to claim 2 or claim 2 and one of the claims 4 to 13, characterized in that the filler connection (1) is provided with an all-round collecting channel (16) upstream of the valve seat.

15. Fuel filter pipe for a fuel tank according to claim 2 or claim 2 and one of the claims 4 to 14, characterized in that the filler connection (1) has a connecting piece (17) for the connection of a hose leading to the fuel tank.

16. Fuel filter pipe for a fuel tank according to one of the claims 3 to 13, characterized in that the widening of the guide tube (tube parts 7a, 7b) comprises lateral openings (18).

17. Fuel filter pipe for a fuel tank according to one of the claims 3 to 10 and 16, characterized in that the bush (10) is integral with the guide tube (tube part 7a) and is arranged on the end thereof remote from the filler connection opening.

18. Fuel filter pipe for a fuel tank according to one of the claims 3 to 13, 16 and 17, characterized in that the guide tube (tube parts 7a, 7b) are internally provided with at least one longitudinal web (19) and the valve body (5) has a slot (20) receiving said web.

19. Fuel filter pipe for a fuel tank according to one of the claims 3 to 13 and 16 to 18, characterized in that the guide tube (tube part 7a, 7b) comprises two telescoped parts.

20. Fuel filter pipe for a fuel tank according to claim 19, characterized in that the tube part (7b) facing the filler connection opening is surrounded by the other tube part (7a) and has a bevel serving as valve seat (2).

21. Fuel filter pipe for a fuel tank according to one of the claims 3 to 13 and 16 to 20, characterized in that at its end facing the filler connection opening, the guide tube (tube part 7b) is inverted over outwards accompanied by the formation of an annular zone and covers the opening rim (opening 8) of filler connection (1).

22. Fuel filter pipe for a fuel tank according to claim 21, characterized in that a annular attachment 22 is provided on the opening rim (opening 8) and that between the attachment (22) and the rim (23) of the guide tube (tube part 7b) covering the attachment (22) there is a rotary coupling, which can be destroyed after fitting the fuel tank filter pipe.

23. Fuel tank filter pipe for a fuel tank according to claim 22, characterized in that the rotary coupling comprises a driver (24) and a stop (25), which can be separated from one another by the axial displacement of the guide tube (tube parts 7a, 7b) and that the guide tube (7) can be axially arrested by a permanent locking mechanism (26) in the position where driver (24) and stop (25) are disengaged.

24. Fuel filter pipe for a fuel tank according to claim 22, characterized in that a packing is provided both between the attachment (22) and the opening rim (8) of filler connection (1) and between attachment (22) and the inverted over rim (23) of guide tube (7b).

25. Fuel filter pipe for a fuel tank according to claim 22, characterized in that the opening (8) of the filler connection (1) has two inverted over rim parts (29) with a sloping terminal edge leaving free a ring segment area and that to attachment (22) are connected two gripping hooks (30) running up onto the terminal edges on rotation (bayonet joint).

26. Fuel filter pipe for a fuel tank according to claim 25, characterized in that the gripping hooks (30) are axially biased by a spring (31) supported on attachment (22).

27. Fuel filter pipe for a fuel tank according to claim 26, characterized in that the gripping hooks (30) are connected to a ring (32) and that the spring (31) is arranged between ring (32) and attachment (22).

28. Fuel filter pipe for a fuel tank according to claims 19 to 22, characterized in that the outer of the two tube parts (tube part 7a) extends over and beyond opening (8) and has an external thread (37) there, which engages with a corresponding internal thread (38) of attachment (22) and that the outer of the two tube parts (tube part 7a) has two stop edges (39) which, like the gripping hooks of a tank cover, can be inserted in the opening region of the filler connection (1) and abut there.

29. Fuel filter pipe for a fuel tank according to claim 28 characterized in that the attachment (22) has several local depressions (40), in which positively engage tongues (41) connected to the opening-side part of the guide tube (tube 7b) or its inverted over rim (23).

30. Fuel filter pipe for a fuel tank according to claim 29, characterized in that tongues (41) are elastic.

31. Fuel filter pipe for a fuel tank according to claim 30, characterized in that the opening side tube part (tube part 7b) of the guide tube is axially displaceable, the elastic tongues (41) being removed from the local depressions (40) under deformation and engaging in an all-round slot in attachment (22), so that following axial displacement, the opening-side part of the guide tube (tube part 7b) is axially fixed with respect to attachment 22, but is freely rotatable with respect thereto.

32. Fuel filter pipe for a fuel tank according to claims 28 to 31 and claim 6, characterized in that the stop edges (39) are the opening-side edges of two longitudinal webs (19') arranged on the tank-side part (tube part 7a) of the guide tube, which run together at the tank-side end of guide tube (7) and carry bush (10).

**Revendications**

1. Fermeture autoverrouillante de réservoir de carburant logée dans une tubulure de remplissage (1) de réservoir de carburant, preécontrainte dans la direction d'un siège de soupape (2), par un ressort de fermeture (3), comportant une pièce en forme d'entretoise (4), avec dans la tubulure de remplissage (1), un corps de soupape (5) mobile à peu près coaxialement qui, par l'introduction d'un pistolet distributeur (6) sur l'entretoise (4) dans le sens de l'écoulement du carburant à verser, est mobile par rapport à son siège de soupape (2) de telle sorte que l'entretoise, lorsque la tubulure de remplissage est engagée, permet un écoulement latéral du carburant, caractérisée en ce que le corps de soupape (5), en position ouverte est guidé dans un tube de guidage de prolongement dans le sens du flux du carburant à verser (7; pièces tubulaires 7a, 7b) et en ce que les faces partielles du côté supérieur du corps de soupape (5) orientées vers l'embouchure de la tubulure de remplissage (1) qui se trouvent en dehors des parties de la face supérieure du corps de soupape recouvertes par l'entretoise (4) sont de forme ovoïde, sphérique ou tronconique.

2. Fermeture de réservoir de carburant selon revendication 1, caractérisée en ce que la tubulure de remplissage (1) est en forme de tube de guidage (7).

3. Fermeture de réservoir de carburant selon revendication 1, caractérisée en ce que le tube de guidage (pièces tubulaires 7a, 7b) est introduit dans la tubulure de remplissage (1) et qu'il est fixé à l'embouchure (8) de la tubulure de remplissage (1) sous forme d'un bouchon de reservoir.

4. Fermeture de réservoir de carburant selon l'une quelconque des précédentes revendications 1 à 3, caractérisée en ce que le corps de soupape (5) est guidé par une tige de guidage concentrique (9).

5. Fermeture de réservoir de carburant selon revendication 4, caractérisée en ce la tige de guidage (9) est montée sur le côté du corps de soupape (5) partant de l'embouchure de la tubulure de remplissage.

6. Fermeture de réservoir de carburant selon revendication 5, caractérisée en ce que la tige de guidage (9) est guidée dans un bague (10) montée dans le tuyau de guidage (7).

7. Fermeture de réservoir de carburant selon revendication 6, caractérisée en ce que la bague (10) comporte un siège de ressort en forme d'enveloppe extérieure cylindrique, muni d'un épaulement annulaire (11).

8. Fermeture de réservoir de carburant selon l'une quelconque des revendications 1 à 7, caractérisée en ce que le corps de soupape (5) comporte sur son côté s'écartant de l'embouchure de la tubulure de remplissage, une cavité (12) de forme annulaire servant de siège de ressort.

9. Fermeture de réservoir de carburant selon l'une quelconque des revendications 1 à 8, caractérisée en ce que le siège de soupape (2) comporte une réduction conique du tuyau de guidage (7).

10. Fermeture de réservoir de carburant selon l'une quelconque des revendications 1 à 9, caractérisée en ce que le corps de soupape (5) comporte un joint (13) portant sur le siège de soupape (2).

11. Fermeture de réservoir de carburant selon l'une quelconque des revendications 1 à 10, caractérisée en ce que l'entretoise (4) comporte trois ailettes disposées en rotation symétrique à peu près parallèlement à l'axe.

12. Fermeture de réservoir de carburant selon l'une quelconque des revendications 1 à 11, caractérisée en ce que la bague (10) vient porter sur un épaulement annulaire (14) du tube de guidage (7).

13. Fermeture de réservoir de carburant selon revendication 12, caractérisée en ce que l'application se fait par l'intermédiaire de trois saillies élastiques (15) au minimum et que la bague (10) peut être introduite dans le côté du tube de guidage (7) par le côté du réservoir de carburant, de sorte que les saillies élastiques (15) coulissent sur l'épaulement annulaire (14) et s'y enclenchent.

14. Fermeture de réservoir de carburant selon revendication 2 ou selon revendication 2 et l'une quelconque des revendications 4 à 13, caractérisée en ce que la tubulure de remplissage (1) comporte, en amont du siège de soupape, un canal collecteur périphérique (16).

15. Fermeture de réservoir de carburant selon revendication 2 ou selon revendication 2 et l'une quelconque des revendications 4 à 14, caractérisée en ce que la tubulure de remplissage (1) comporte un raccord (17) pour le branchement d'un tuyau souple relié au réservoir de carburant.

16. Fermeture de réservoir de carburant selon l'une quelconque des revendications 3 à 13, caractérisée en ce que le prolongement du tube de guidage (pièces tubulaires 7a, 7b) comporte des trous de communications latéraux (18).

17. Fermeture de réservoir de carburant selon l'une quelconque des revendications 3 à 10 et 16, caractérisée en ce que la bague (10) ne forme qu'une seule pièce avec le tube de guidage (pièce tubulaire 7a) et que l'extrémité éloignée de l'embouchure de la tubulure de remplissage y est montée.

18. Fermeture de réservoir de carburant selon l'une quelconque des revendications 3 à 13 et 16 et 17, caractérisée en ce que le tube de guidage (pièces tubulaires 7a, 7b) comporte sur la face interne, une nervure longitudinale (19) au minimum et que le corps de soupape (5) comporte une rainure (20) recevent la nervure longitudinale (19).

19. Fermeture de réservoir de carburant selon l'une quelconque des revendications 3 à 13 et 16 à 18, caractérisée en ce que le tube de guidage (pièces tubulaires 7a, 7b) est composé de deux éléments montés l'un dans l'autre.

20. Fermeture de réservoir de carburant selon revendication 19, caractérisée en ce que la pièce tubulaire (7b) tournée vers l'embouchure du tube de remplissage est entourée par l'autre pièce tubulaire (7a) et qu'elle comporte un chanfrein servant de siège de soupape (2).

21. Fermeture de réservoir de carburant selon l'une quelconque des revendications 3 à 13 et 16 à 20, caractérisée en ce que le tube de guidage (pièce tubulaire 7b) est retourné vers l'extérieur à son extrémité tournée vers l'embouchure de la tubulure de remplissage afin de former un volume annulaire et recouvre le bord de l'embouchure (embouchure 8) de la tubulure de remplissage.

22. Fermeture de réservoir de carburant selon revendication 21, caractérisée en ce qu'un embout de forme annulaire (22) est prévu et qu'entre l'embout (22) et le bord retourné (23) du tube de guidage (pièce tubulaire 7b) recouvrant l'embout (22), il existe un accouplement tournant qui, après montage de la fermeture de réservoir de carburant peut être détruit.

23. Fermeture de réservoir de carburant selon revendication 22, caractérisée en ce que l'accouplement tournant comprend un organe d'entraînement (24) et une butée (25) dissociables l'un de l'autre par un décalage axial du tube de guidage (pièces tubulaires 7a, 7b) et que le tube de guidage (7), en position avec organe d'entraînement (24) et butée (25) débrayés peut être arrêté axialement par un mécanisme d'enclenchement (26) indesserrable.

24. Fermeture de réservoir de carburant selon revendication 22, caractérisée en ce qu'entre l'organe formant embout (22) et le bord de l'embouchure (8) de la tubulure de remplissage (1) ainsi qu'entre l'embout (22) et le bord retourné (23) du tube de guidage il est prévu un joint (27, 28) dans chaque cas.

25. Fermeture de réservoir de carburant selon revendication 22, caractérisée en ce que l'embouchure (8) de la tubulure de remplissage (1) comporte deux éléments de bordure (29) retournés vers l'intéreur, constituant un espace en forme de segment annulaire avec arête d'extrémité oblique et qu'elle est reliée à l'embout (22) par deux crochets de fixation (30) par rotation sur l'arête d'extrémité (fermeture à baïonnette).

26. Fermeture de réservoir de carburant selon revendication 25, caractérisée en ce que les crochets de fixation (30) sont soumis à une précontrainte exercée dans le sens axial par un ressort (31) venant porter sur l'embout (22).

27. Fermeture de réservoir de carburant selon revendication 26, caractérisée en ce que les crochets de fixation (30) sont reliés à un anneau (32) et que le ressort (31) est monté entre l'anneau (32) et l'embout (22).

28. Fermeture de réservoir de carburant selon l'une quelconque des revendications 19 à 22, caractérisée en ce que la plus extérieure des deux pièces tubulaires (pièce tubulaire 7a) est prolongée vers l'extérieur jusqu'au dessus de l'embouchure (8) et comporte en cet endroit un filetage extérieur (37) qui vient en engagement sur un filetage intérieur correspondant (38) de l'embout (22) et que la plus extérieure des deux pièces tubulaires (pièce tubulaire 7a) comporte deux arêtes formant butée (39) qui, comme les crochets de fixation d'un bouchon de réservoir sont introduites dans la zone de l'embouchure de la tubulure de remplissage (1) et y viennent en butée.

29. Fermeture de réservoir de carburant selon revendication 28, caractérisée en ce que l'embout (22) comporte plusieurs évidements locaux (40) dans lesquels s'engagent par blocage la partie, côté embouchure du tube de guidage (pièce tubulaire 7b) ou des languettes (41) ménagées sur son bord retourné (23).

30. Fermeture de réservoir de carburant selon revendication 29, caractérisée en ce que les languettes (41) sont élastiques.

31. Fermeture de réservoir de carburant selon revendication 30, caractérisée en ce que la pièce tubulaire, côté embouchure (pièce tubulaire 7b), du tube de guidage est déplacable axialement, de telle sorte que les languettes élastiques (41) sont écartées des évidements locaux (40) par déformation et viennent s'enclencher dans une rainure périphérique de l'embout (22) afin qu'après un décalage axial de la partie côté embouchure du tube de guidage (pièce tubulaire 7b) elle soient fixées axialement par rapport à l'embout 22 tout en pouvant néanmoins pivoter librement par rapport à celui-ci.

32. Fermeture de réservoir de carburant selon l'une quelconque des revendications 28 à 31 et la revendication 6, caractérisée en ce que les arêtes de butée (39) sont les deux arêtes côté embouchure de la pièce côté réservoir (pièce tubulaire 7a) des nervures longitudinales (19′) disposées sur le tube de guidage qui se réunissent à l'extrémité, côté réservoir du tube de guidage (7), et supportent la bague (10).

FIG. 1

FIG. 2

FIG. 3

FIG. 4